# EUROPÄISCHE PATENTSCHRIFT

(11) **EP 0 321 814 B1**
(45) Veröffentlichungstag und Bekanntmachung des Hinweises auf die Patenterteilung: **16.03.1994**
(21) Anmeldenummer: 88120691.6
(22) Anmeldetag: 10.12.1988
(51) Int. Cl.: C09B 67/10, C09B 29/20, D06P 1/18

(54) **Verfahren zur Herstellung eines Azofarbstoffes**
Process for the manufacture of an azo dye
Procédé de fabrication d'un colorant azoique

(30) Priorität: 21.12.1987 DE 3743349
(43) Veröffentlichungstag der Anmeldung: 28.06.1989
(73) Patentinhaber: CASSELLA Aktiengesellschaft, D-60386 Frankfurt (DE)
(72) Erfinder: Effenberger, Gunther, Dr., D-6368 Bad Vilbel (DE); Kruse, Hubert, D-6233 Kelkheim (DE)
(74) Vertreter: Muley, Ralf, Dr.

(56) Entgegenhaltungen:
- EP-A- 0 031 478
- US-A- 2 007 382
- CHEMICAL ABSTRACTS, Band 83, Nr. 12, 22. September 1975, Seite 158, Zusammenfassung Nr. 116949j, Columbus, Ohio, US; & CZ-A-156 906 (F. MUZIK et al.) 15-01-1975

## Beschreibung

Die Erfindung betrifft ein Verfahren zur Herstellung des Azofarbstoffes der Formel I 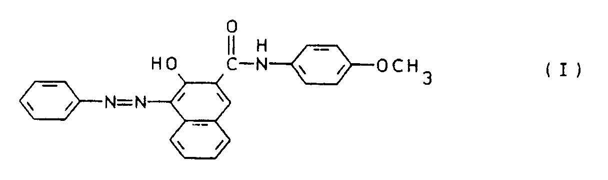
Ferner betrifft die Erfindung den Farbstoff der Formel I in der β-Modifikation, ein Verfahren zur Herstellung des Farbstoffs der Formel I in der β-Modifikation, aus den Farbstoff der Formel I in der α-Modifikation und die Verwendung des Farbstoffs der Formel I in der β-Modifikation zum Färben und Bedrucken von geformten Gebilden, wie Fasern, Geweben und Folien aus synthetischen und halbsythetischen Materialien, ferner Färbepräparate, die den Farbstoff der Formel I in der β-Modifikation enthalten.

Der Farbstoff der Formel I wird in Form wäßriger Dispersionen der bisher bekannten α-Kristallmodifikation zum Färben und Bedrucken von geformten Gebilden aus linearen aromatischen Polyestern oder aus Polyamiden verwendet, vgl. DBP 1 131 639. Der Farbstoff liefert dabei echte rotorange Färbungen und Drucke.

Der Farbstoff der Formel I wird durch Kuppeln von diazotiertem Anilin in wäßriger Phase auf N-(p-Methoxyphenyl)-3-hydroxynaphthalin-2-carbonamid hergestellt. Nach Beendigung der Kupplung wird der ausgefallene Farbstoff durch Filtration isoliert und in der Regel mit Wasser neutral und salzfrei gewaschen. Dabei wird der Farbstoff in Form einer wäßrigen Paste erhalten. Nachteilig dabei ist, daß die Paste nur schlecht filtriert und die isolierte Paste den Farbstoff nur in weniger als 20 Gew.% enthält.

Aus Chemical Abstracts, Vol. 83, 1975, Seite 158, 116949i, ist es bereits bekannt, diazotiertes p-Aminobenzoesäureamid in wäßriger Lösung auf N-(m-Ethoxyphenol)-3-hydroxynaphthalin-2-carbonamid zu kuppeln und die entstandene amorphe α-Modifikation mit wäßrigen oberflächenaktiven Mitteln, Alkoholen, Estern, organischen Basen, DMF, Chlorbenzol oder Dioxan zu erhitzen.

Nach dem erfindungsgemäßen Verfahren kann der Farbstoff der Formel I mit einem wesentlich höheren Pastengehalt, von z.B. mehr als 60 Gew.%, hergestellt werden.

Die Erfindung betrifft daher ein Verfahren zur Herstellung des Farbstoffs der Formel I durch Kupplung von diazotiertem Anilin in wäßriger Phase auf N-(p-Methoxyphenyl)-3-hydroxynaphthalin-2-carbonamid und anschließende Isolierung des Farbstoffs. Das erfindungsgemäße Verfahren ist dadurch gekennzeichnet, daß die nach beendeter Kupplung vorliegende wäßrige Suspension in Gegenwart eines Dispergiermittels auf Temperaturen von 50°C bis zum Siedepunkt der wäßrigen Phase, vorzugsweise 50 bis 95°C, erhitzt wird. Danach wird der Farbstoff in an sich bekannter Weise isoliert, also z.B. abfiltriert. Die Isolierung des Farbstoffs kann aus der heißen Suspension oder nach einer Abkühlung der Suspension auf niedere Temperaturen, z.B. bis Raumtemperatur, erfolgen. Vorteilhafterweise erfolgt die Isolierung des Farbstoffs aus der heißen Suspension. Die Abfiltration erfolgt auf an sich bekannten Filtriervorrichtungen, in der Betriebspraxis meist auf Filterpressen. Abgesehen von Sonderfällen, wird der isolierte Farbstoff noch neutral und salzfrei gewaschen, was z.B. direkt auf der Filtriervorrichtung erfolgen kann. Danach liegt eine wäßrige Paste vor, die den Farbstoff der Formel I zu mehr als 60 Gew.% enthält und die in üblicher Weise zur Herstellung von Färbepräparaten bzw. zur Gewinnung des trockenen Farbstoffs verwendet werden kann.

Bei dem erfindungsgemäßen Verfahren wird die Diazotierung und Kupplung in an sich bekannter Weise durchgeführt. So wird das Anilin z.B. in stark saurer wäßriger Lösung durch Einwirkung eines Diazotierungsmittels diazotiert. Für die stark saure wäßrige Lösung werden z.B. wäßrige Phosphorsäure, Schwefelsäure oder insbesondere Salzsäure verwendet. Diazotierungsmittel sind z.B. Salze der salpetrigen Säure, insbesondere die Alkalisalze, wie z.B. Natriumnitrit, oder salpetrige Säure entwickelnde Substanzen, wie z.B. Nitrosylschwefelsäure.

Bei der Diazotierung wird üblicherweise das Anilin in der wäßrigen Mineralsäure vorgelegt und das Diazotierungsmittel zudosiert. Die Diazotierung erfolgt normalerweise bei Temperaturen von -20 bis +15°C, vorzugsweise -10 bis +10°C.

Die Kupplungskomponente N-(p-Methoxyphenyl)-3-hydroxynaphthalin-2-carbonamid wird in Wasser in Gegenwart einer Base, wie z.B. einem Alkali- oder Erdalkalihydroxid, gelöst.

Zur Durchführung der Kupplung läßt man in an sich bekannter Weise die Diazoniumsalzlösung unter Rühren zu der Kupplungslösung zufließen, wobei man die Kupplungstemperatur durch indirekte oder direkte Kühlung, z.B. mit Eis, im Bereich von z.B. -15 bis +40°, vorzugsweise 0 bis 30°C, hält. Anschließend rührt man noch so lange nach, bis die Kupplung beendet ist.

Nach beendeter Kupplung wird erfindungsgemäß die vorliegende wäßrige Farbstoffsuspension auf Temperaturen von 50°C bis zum Siedepunkt der wäßrigen Phase erhitzt. Das Erhitzen kann unter Normaldruck oder unter Überdruck durchgeführt werden. Beim Erhitzen unter Überdruck werden Temperaturen von z.B. bis 140°C erreicht. In der Regel ist jedoch ein Erhitzen unter Überdruck nicht erforderlich. Vorzugsweise wird auf Temperaturen von 50 bis 95°C erhitzt. Zweckmäßigerweise wird bei dem Erhitzen gerührt.

Es wurde festgestellt, daß sich bei dem Erhitzen die Kristallmodifikation des Farbstoffs ändert und sich aus der ursprünglich vorliegenden α-Modifikation die neue β-Modifikation bildet. Die Bildung der neuen β-Modifikation des Farbstoffs I ist normalerweise nach einer Erhitzungsdauer von ¹/4 Stunde bis 10 Stunden, vorzugsweise ¹/2 Stunde bis 2 Stunden, abgeschlossen. Die genaue Erhitzungsdauer läßt sich mikroskopisch oder röntgenologisch an entnommenen Farbstoffproben bestimmen. Es wird so lange erhitzt, bis die Umwandlung in die β-Modifikation erfolgt ist, insbesondere so lange, bis diese Umwandlung abgeschlossen ist.

Die neue β-Modifikation des Farbstoffs der Formel I besitzt ein Röntgenbeugungsdiagramm (Cu-Kα-Strahlung) mit folgenden Linien bei den Beugungswinkeln 2 Theta (°):

| | |
|---|---|
| Linien großer Intensität: | 18,34; 26,46; |
| Linien mittlerer Intensität: | 12,02; 20,29: 22,26; 23,94; |
| Linien kleiner Intensität: | 7,35; 7,92; 8,42; 10,08; 11,10; 27,93; 28,11; 28,89; 29,34. |

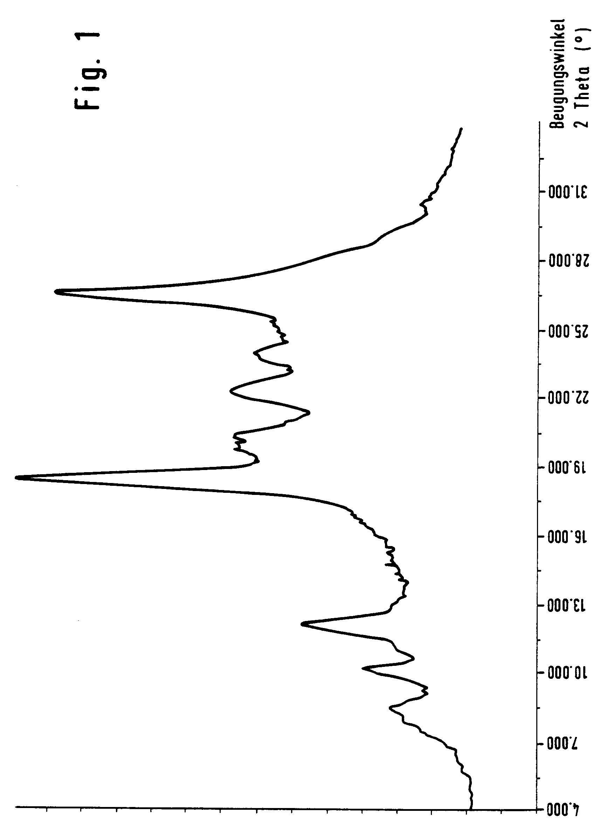

Das mit Cu-Kα-Strahlung aufgenommene Röntgenbeugungsdiagramm der β-Modifikation des Farbstoffs I ist in Figur 1 dargestellt. Zur Aufnahme des Röntgenbeugungsdiagramms wurde ein Zählrohrdiffraktometer D 501 der Fa. Siemens benutzt.

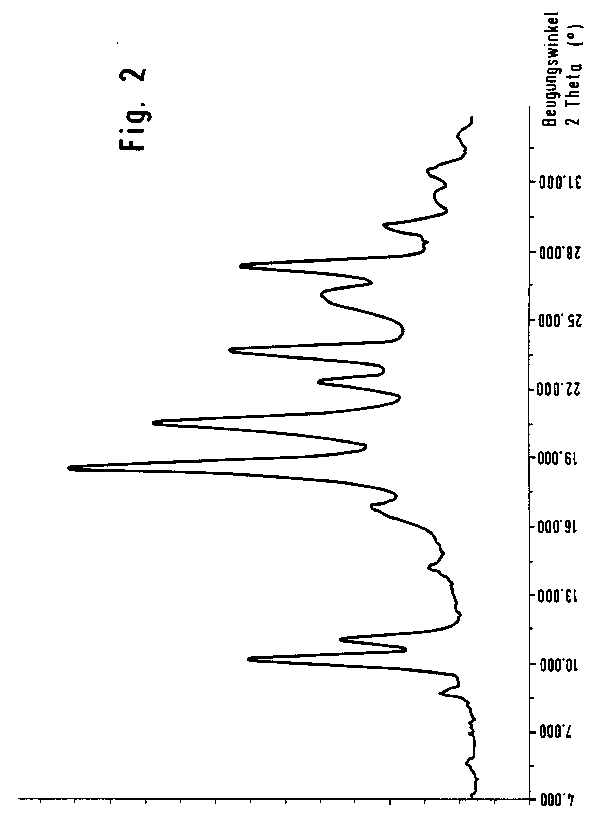

Die bisher bekannte α-Modifikation des Farbstoffs der Formel I weist das in Figur 2 gezeigte Röntgenbeugungsdiagramm (Cu-Kα-Strahlung) auf, das folgende Linien bei den Beugungswinkeln 2 Theta (°) besitzt:

| | |
|---|---|
| Linien großer Intensität: | 18,48; 20,47; |
| Linien mittlerer Intensität: | 10,15; 23,58: 27,26; |
| Linien kleiner Intensität: | 8,76; 11,03; 14,21; 16,76; 22,26; 25,86; 29,07; 30,35; 31,44; 32,97. |

Das erfindungsgemäße Erhitzen der wäßrigen Farbstoffsuspension wird in Gegenwart eines Dispergiermittels durchgeführt. Das Dispergiermittel kann dabei zweckmäßigerweise bereits bei der Kupplung vorhanden sein, z.B. zusammen mit der Kupplungskomponente vorgelegt werden. Geeignete Dispergiermittel sind insbesondere synthetische Produkte mit grenzflächenaktiven Eigenschaften, die kationischen oder vorzugsweise nichtionischen oder anionischen Charakter haben können. Es können auch Mischungen aus zwei oder mehr verschiedenen Dispergiermitteln, so z.B. von nichtionischen und anionischen Dispergiermitteln verwendet werden.

Geeignete anionische Dispergiermittel sind z.B.: die Kondensationsprodukte von aromatischen Sulfonsäure mit Formaldehyd, Ligninsulfonate mit einem durchschnittlichen Molekulargewicht zwischen 1000 und 80 000, Sulfitcelluloseablauge, Dialkylsulfosuccinate mit je 3 bis 10 C-Atomen in den Alkylgruppen, sulfatierte oder sulfonierte Fettsäuren oder Fettsäureester mit 10 bis 22 C-Atomen im Fettsäurerest, längerkettige Alkyl- und Alkylarylsulfonate, wie beispielsweise Dodecylbenzolsulfonat, sek. Alkansulfonate, Diisopropyl-, Diisobutylnaphthalinsulfonat oder Dinaphthylmethansulfonat. Normalerweise liegen diese anionischen grenzflächenaktiven Substanzen in Form von Salzen mit Alkalimetallen, insbesondere Natrium, Ammonium oder Aminen wie Morpholin, Triethanolamin, Ethanolamin, Isopropanolamin oder mit 2- oder 3-wertigen Kationen, wie z.B. Calcium, Magnesium oder Aluminium vor.

Geeignete kationische grenzflächenaktiven Dispergiermittel sind z.B.: quartäre Alkylammoniumhalogenide mit mindestens einem C₁₂ bis C₂₅ Alkylrest, langkettige quartäre Verbindungen des Pyridins, Morpholins und Imidazolins, z.B. Laurylpyridiniumchlorid.

Geeignete nichtionische grenzflächenaktive Dispergiermittel sind z.B.: Ethylenoxid- bzw. Propylenoxid-Addukte z.B. mit gesättigten und/oder ungesättigten Fettalkoholen mit 6 bis 20 C-Atomen oder Alkylphenolen mit 4 bis 12 C-Atomen im Alkylrest, Wasser oder gesättigten und/oder ungesättigten Fettaminen mit 14 bis 20 C-Atomen oder gesättigten und/oder ungesättigten Fettsäuren mit 14 bis 20 C-Atomen; ferner: Pfropfpolymerisate von Ethylenoxid und Polypropylenglykol, sowie gemischte Ester der o-Phosphorsäure mit Polyglykolen (Molekulargewicht zwischen 200 und 2000) und gesättigten oder ungesättigten längerkettigen Fettalkoholen, die mit 1 bis 4 Einheiten Ethylenoxid oxethyliert sind, wie beispielsweise der Ester aus o-Phosphorsäure, Polyglykol (Molekulargewicht 300) und dem Umsetzungsprodukt aus einem Mol Ethylenoxid und einem Mol Laurylalkohol.

Das Dispergiermittel bzw. das Dispergiermittelgemisch wird z.B. in einer Menge von 0,2 bis 30 Gew.%, insbesondere von 0,5 bis 10 Gew.%, bezogen auf die nach der Kupplung vorliegende Farbstoffmenge eingesetzt.

Es ist zweckmäßig, vor dem Erhitzen den pH-Wert der wäßrigen Suspension auf 7 bis 10, vorzugsweise 8 bis 9, einzustellen. Diese pH-Wert Einstellung kann durch Zugabe einer Säure, insbesondere einer Mineralsäure, wie Phosphorsäure, Schwefelsäure oder insbesondere Salzsäure, erfolgen.

Bei dem erfindungsgemäßen Verfahren wird nicht nur eine erhebliche Zunahme des Pastengehaltes erreicht, sondern es wird gleichzeitig auch die Zeit für die Gewinnung der Paste durch Abfiltration erheblich, und zwar in der Regel um etwa den Faktor 3, verkürzt. Dadurch wird auch die Raum-Zeit-Ausbeute des Herstellungsverfahrens erheblich verbessert.

Es wurde weiter gefunden, daß die bei dem erfindungsgemäßen Verfahren anfallende β-Modifikation des Farbstoffs der Formel I beim Färben von geformten Gebilden aus synthetischen oder halbsynthetischen Materialien, insbesondere in der Egalität und der Reibechtheit, der bisher bekannten α-Modifikation überlegen ist.

Färbt man beispielsweise Polyesterfasermaterialien aus wäßrigen Bad bei erhöhter Temperatur mit einer Dispersion, die den Farbstoff der Formel I in der α-Modifikation enthält, so erhält man in der Regel ungleichmäßige Färbungen mit schlechten Reibechtheiten. Derartige Färbungen treten beispielsweise in all den Fällen auf, bei denen die Färbeflotte nur langsam erschöpft wird oder bei denen mit einem so großen Farbstoffüberschuß gearbeitet wird, daß beispielsweise in der Apparatefärberei für loses Material, für Vorgespinste, wie Kammzüge, oder Garne mit Packsystem oder beim Färben von Spulenwickeln, niemals eine Erschöpfung des Färbebades eintritt. Die genannten Nachteile sind dabei auf eine während des Färbevorganges auftretende ungünstig verlaufende Änderung des physikalischen Zustands des Farbstoffs zurückzuführen.

Überraschenderweise verhält sich dagegen der Farbstoff I in der erfindungsgemäßen neuen β-Modifikation beim Färben von synthetischen und halbsynthetischen Fasermaterialien wesentlich vorteilhafter. Unter den für das Färben mit Dispersionsfarbstoffen üblichen Bedingungen, d.h. im wäßrigen Medium bei Temperaturen von bis etwa 140°C, gegebenenfalls in Gegenwart üblicher Färbereihilfsmittel, vorzugsweise bei Temperaturen von 100 bis etwa 140°C unter Druck, oder aber bei der Siedetemperatur des Wassers in Gegenwart von Carriern, wie beispielsweise Phenylphenolen, Polychlorbenzolverbindungen oder ähnlichen Hilfsmitteln, ändert der Farbstoff I in der β-Modifikation seine Kristallstruktur nicht mehr und die Kristallgeometrie, wie Kristallgröße, nur soweit, daß die färberischen Eigenschaften nicht nachteilig beeinflußt werden. Dispersionen des Farbstoffs I in der β-Modifikation verhalten sich somit färbestabil, wobei der Farbstoff allein oder in Mischungen mit anderen Dispersionsfarbstoffen zur Anwendung kommen kann. Beispielsweise lassen sich mit einer Dispersion des Farbstoffs I in der erfindungsgemäßen β-Modifikation auf Polyesterfasermaterial aus wäßrigen Bad bei 130°C unter Druck gleichmäßige Ausfärbungen hoher Reibechtheit erzielen. Insbesondere erhält man mit Dispersionen des Farbstoffs I in der β-Modifikation in der Apparatefärberei ablagerungsfreie Ausfärbungen von Spulenwickeln aus Polyesterfasermaterial.

Die β-Modifikation des Farbstoffs I ist daher hervorragend zum Färben und Bedrucken von geformten Gebilden, wie Fasern, Geweben und Folien aus synthetischen und halbsythetischen Materialien, nach an sich für das Färben und Bedrucken von Dispersionsfarbstoffen bekannten Verfahren geeignet.

Unter dem Begriff "synthetische und halbsynthetische Materialien" sind hierbei beispielsweise Materialien aus Cellulose-di-, -2¹/2- oder -triacetat, sowie Fasermaterialien aus Polyamiden, wie Poly-ε-caprolactam oder Polyhexamethylendiaminadipat, oder aus Polyurethanen, Polyolefinen oder Polycarbonaten, besonders aber Fasermaterialien aus Polyestern, wie Polyethylenglykolterephthalatfasern, zu verstehen.

Für das Färben und Bedrucken wird die β-Modifikation des Farbstoffs I in an sich bekannter Weise in eine hohe Feinverteilung überführt.

Es wurde weiter gefunden, daß man auch eine bereits vorliegende α-Modifikation des Farbstoffs I in wäßrigem Medium in Gegenwart eines Dispergiermittels, vorzugsweise unter Rühren, durch Erhitzen auf Temperaturen von 50°C bis zum Siedepunkt der wäßrigen Phase, gegebenenfalls unter Druck, vorzugsweise bei Normaldruck von 50 bis 95°C, in die β-Modifikation umwandeln kann.

Das Erhitzen wird so lange durchgeführt, bis die α-Modifikation in die β-Modifikation umgewandelt worden ist, was in der Regel ¹/4 Stunde bis 10 Stunden, vorzugsweise ¹/2 Stunde bis 2 Stunden dauert. Die Umwandlung kann röntgenographisch oder mikroskopisch an entnommenen Proben verfolgt werden.

Als Dispergiermittel können die bereits genannten Dispergiermittel einzeln oder in Kombination miteinander verwendet werden. Es werden normalerweise 1 bis 500 Gew.%, vorzugsweise 5 bis 400 Gew.%, Dispergiermittel, bezogen auf die umzuwandelnde α-Modifikation eingesetzt.

Das Erhitzen kann in verschiedener Weise durchgeführt werden. So kann man z.B. eine neutral und salzfrei gewaschene Paste, die den Farbstoff der Formel I in der α-Modifikation enthält, in wäßrigen Medium, unter Zusatz des Dispergiermittels, vorzugsweise unter Rühren, erhitzen. Das Erhitzen kann aber auch z.B. im Verlauf der üblichen Überführung des Farbstoffs in eine hohe Feinverteilung vorgenommen werden. Die α-Modifikation wird dabei unter Zusatz eines oder mehrerer Dispergiermittel, sowie gegebenenfalls anderen üblichen Zusätzen (wie z.B. Staubschutz-, Frostschutz-, Netzmittel, Austrocknungs-verhinderer etc.) naß auf üblichen Vorrichtungen, wie z.B. Mühlen oder Knetern, in eine feindisperse Form überführt. Geeignete Mühlen sind z.B. Kugel-, Schwing-, Perl-, Sandmühlen. Wenn die Überführung des Farbstoffs in eine feindisperse Form bei den genannten Temperaturen, vorzugsweise von 50 bis 95°C, durchgeführt wird, erfolgt dabei auch eine Umwandlung der färbeinstabilen α-Modifikation des Farbstoffs der Formel I in die färbestabile β-Modifikation des Farbstoffs der Formel I.

Die Herstellung der β-Modifikation des Farbstoffs I im Zuge der eingangs beschriebenen Farbstoffherstellung durch Diazotierung und Kupplung und Erhitzen den bei der Kupplung anfallenden Suspension ist bevorzugt.

Sofern die färbestabile β-Modifikation des Farbstoffs der Formel I nicht durch Erhitzen im Verlauf der Überführung in eine hohe Feinverteilung hergestellt worden ist und daher bereits in hoher Feinverteilung vorliegt, wird sie für die färberische Anwendung bzw. für die Herstellung von Färbepräparaten in der bereits genannten an sich bekannter Weise in eine hohe Feinverteilung überführt. Bei der Herstellung von Färbepräparaten werden dabei in an sich bekannter Weise gegebenenfalls übliche Zusätze, wie z.B. Staubschutz-, Frostschutz-, Netzmittel, Austrocknungsverhinderer, Fließverbesserungsmittel etc. zugesetzt.

Bei der Feinverteilung werden die Farbstoffteilchen mechanisch so weit zerkleinert, bis eine optimale spezifische Oberfläche erreicht und die Sedimentation der Farbstoffteilchen in einer flüssigen Farbstoffzubereitung bzw. im Färbebad möglichst gering ist. Die Größe der Farbstoffteilchen liegt nach beendeter Feinverteilung im allgemeinen bei etwa 0,1 bis 10 µm.

Die β-Modifikation des Farbstoffs I besitzt bei den feinverteilten Dispersionen überraschenderweise auch eine entscheidend bessere Mahlteigstabilität als die bisher bekannte α-Modifikation des Farbstoffs I. Außerdem wird bei der Herstellung feinverteilter Dispersionen der β-Modifikation die bei der Herstellung feinverteilter Dispersionen der α-Modifikation auftretende unerwünschte und störende Schaumbildung praktisch vollständig unterdrückt.

Zur Herstellung pulverförmiger Färbepräparate erfolgt anschließend noch eine an sich bekannte Trocknung.

Weitere Bedeutung kommt der erfindungsgemäßen β-Modifikation dadurch zu, daß Feinverteilungen des Farbstoffs I in dieser Kristallstruktur auch dann den färbereitechnischen Anforderungen genügen, wenn man bei der Herstellung der Feinverteilung von Farbwaren sogenannter technischer Qualität ausgeht anstatt von Waren, die vorher Reinigungsoperationen unterworfen wurden. Diese technische Ware, wie sie nach dem Abfiltrieren von der Kuppelbrühe und nach dem Neutralwaschen mit Wasser als feuchte Paste oder nach dem Trocknen als trockenes Pulver vorliegt, unterscheidet sich von kostspielig und/oder aufwendig, jedenfalls von durch zusätzliche Operationen, wie durch Umkristallisieren oder durch Auswaschen mit organischen Lösungsmitteln, gereinigten Waren dadurch, daß in ihr wechselnde Mengen von Nebenprodukten oder auch Verunreinigungen enthalten sein können. Diese Nebenprodukte oder Verunreinigungen rühren von in technischer Qualität zur Farbstoffherstellung eingesetzten Vorprodukten her oder sind bei der Farbstoffherstellung selbst entstanden.

In den folgenden Beispielen bedeuten die Teile Gewichtsteile.

### Beispiel 1:

a) 23,3 Teile Anilin werden in 300 Teilen Wasser und 80 Teilen Salzsäure gelöst und dann zur Diazotierung bei -5 bis +5°C unter Rühren mit 45 Teilen einer 40 gew.%igen Natriumnitritlösung versetzt. Nach beendeter Umsetzung läßt man die Diazoniumsalzlösung während 30 Minuten zu einer Lösung von 82 Teilen N-(p-Methoxyphenyl)-3-hydroxynaphthalin-2-carbonamid und 2,5 Teilen eines modifizierten Ligninsulfonates in 1000 Teilen Wasser und 110 Teilen 27 gew.%iger Natronlauge bei 5 bis 20°C zufließen. Man rührt 1 Stunde bei 5 bis 20°C nach, stellt mit konzentrierter Salzsäure auf pH 8 bis 9, heizt auf 70°C und hält das Reaktionsgemisch unter Rühren 1 Stunde bei dieser Temperatur. Darauf wird der Farbstoff heiß abgesaugt, wozu 3 Minuten benötigt werden, mit Wasser neutral und salzfrei gewaschen und als Paste isoliert. Diese Paste enthält den Farbstoff in der β-Modifikation und besitzt einen Trockengehalt von 69 Gew.%.
b) 30 Gewichtsteile der nach a) erhaltenen Farbstoffpaste werden unter Zusatz von 60 Gewichtsteilen eines anionischen Dispergiermittels auf Basis eines Kondensationsproduktes aus Naphthalinsulfonsäure und Formaldehyd bei 20°C naß vermahlen, bis 90% der Teilchen gleich oder kleiner als 1 µm groß sind. Nach der Trocknung des Mahlgutes erhält man eine pulverförmige Einstellung des Farbstoffes, die allen anwendungstechnischen Anforderungen hervorragend gerecht wird.

### Vergleichsbeispiel

### (Herstellung des Farbstoffs in der bisher bekannten α-Modifikation)

23,3 Teile Anilin werden in 300 Teilen Wasser und 80 Teilen Salzsäure gelöst und dann zur Diazotierung bei -5 bis +5°C unter Rühren mit 45 Teilen einer 40 gew.%igen Natriumnitritlösung versetzt. Nach beendeter Umsetzung läßt man die Diazoniumsalzlösung während 30 Minuten zu einer Lösung von 82 Teilen N-(p-Methoxyphenyl)-3-hydroxynaphthalin-2-carbonamid in 1000 Teilen Wasser und 110 Teilen 27 gew.%iger Natronlauge bei 5 bis 20°C zufließen. Man rührt 1 Stunde bei 5 bis 20°C nach. Darauf wird der Farbstoff abgesaugt, wozu 9 Minuten benötigt werden, mit Wasser neutral und salzfrei gewaschen und als Paste isoliert. Dieser Paste enthält den Farbstoff I in der α-Modifikation und besitzt einen Trockengehalt von 19 Gew.%.

### Beispiel 2

100 Teile einer Paste, die den Farbstoff I zu 19 Gew.% in der α-Modifikation enthält (diese Paste wird nach dem vorstehenden Vergleichsbeispiel hergestellt), werden unter Zusatz von 60 Gewichtsteilen eines anionischen Dispergiermittels aus Basis eines Kondensationsproduktes aus Naphthalinsulfosäure und Formaldehyd in einer Perlmühle bei 80°C so lange naß vermahlen, bis 90% der Teilchen eine Größe von gleich oder kleiner als 1 µm besitzen und auch die vollständige Kristallstrukturumwandlung in die β-Modifikation beobachtet wird. Nach der Trocknung erhält man eine pulverförmige Einstellung des Farbstoffs der Formel I in der färbestabilen β-Modifikation, die allen anwendungstechnischen Anforderungen hervorragend genügt.

### Beispiel 3

5 g Polyethylenterephthalatfasern in Form eines Gewirkes werden 1 Stunde bei 130°C in einem Bad gefärbt, das 1 Gewichtsprozent des feindispergierten Farbstoffes der Formel I in der β-Modifikation in 200 ml Wasser enthält. Die erhaltene Orangefärbung wird wie üblich reduktiv nachbehandelt, heiß und kalt gespült und getrocknet. Die erhaltene Färbung besitzt gegenüber einer gleich hergestellten Färbung mit der α-Modifikation des Farbstoffs I eine bessere Egalität und bessere Reibechtheit.

### Beispiel 4

25 g Polyethylenterephthalatgewebe werden mit einer Druckpaste bedruckt, die 50 g des Farbstoffs I in der β-Modifikation, 200 g Nafkagummi, 50 g Naphtholdiglykolether und 700 g Wasser im Kilogramm enthält. Nach dem Trocknen wird 30 Sekunden bei 200°C fixiert und schließlich reduktiv nachbehandelt. Man erhält einen orangefarbenen Druck von guten Echtheitseigenschaften, insbesondere guter Reibechtheit.

### Beispiel 5

5 g eines Gewebes aus polymerem ε-Caprolactam werden im Flottenverhältnis 1 : 40 in einem Bad gefärbt, das 2 Gewichtsprozent des feindispergierten Farbstoffes der Formel I in der β-Modifikation enthält. Man färbt 1 Stunde bei 100°C und spült anschließend bei 60°C. Die so erhaltene Färbung besitzt gegenüber eine gleich hergestellte Färbung mit der α-Modifikation des Farbstoffs I, insbesondere eine bessere Egalität und bessere Reibechtheit.

## Patentansprüche

1. Verfahren zur Herstellung des Farbstoffs der Formel I 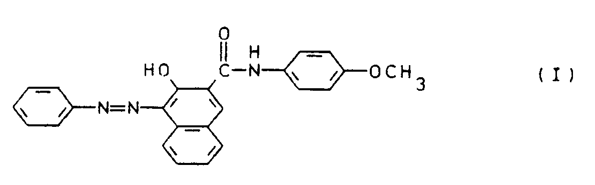 durch Kupplung von diazotiertem Anilin in wäßriger Phase auf N-(p-Methoxyphenyl)-3-hydroxynaphthalin-2-carbonamid und anschließende Isolierung des Farbstoffs, dadurch gekennzeichnet, daß die nach beendeter Kupplung vorliegende wäßrige Suspension in Gegenwart eines Dispergiermittels oder mehrerer Dispergiermittel auf Temperaturen von 50°C bis zum Siedepunkt der wäßrigen Phase erhitzt wird.

2. Verfahren nach Anspruch 1, dadurch gekennzeichnet, daß so lange erhitzt wird, bis die Umwandlung des Farbstoffs in die sich bei der Erhitzung bildende neue Kristallmodifikation erfolgt ist.

3. Verfahren nach Anspruch 1 und/oder 2, dadurch gekennzeichnet, daß auf Temperaturen von 50 bis 95°C erhitzt wird.

4. Verfahren nach einem oder mehreren der Ansprüche 1 bis 3, dadurch gekennzeichnet, daß 0,25 bis 10 Stunden, vorzugsweise 0,5 bis 2 Stunden, erhitzt wird.

5. Verfahren nach einem oder mehreren der Ansprüche 1 bis 4, dadurch gekennzeichnet, daß vor der Erhitzung ein pH Wert von 7 bis 10, vorzugsweise 8 bis 9, eingestellt wird.

6. Verfahren nach einem oder mehreren der Ansprüche 1 bis 5, dadurch gekennzeichnet, daß während des Erhitzens gerührt wird.

7. β-Modifikation des Farbstoffes der Formel I 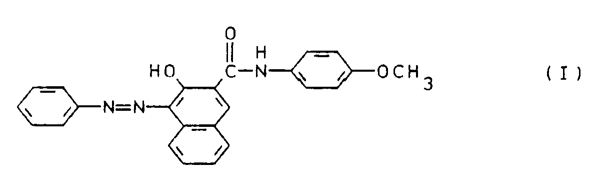 mit dem Röntgenbeugungsdiagramm (Cu-Kα-Strahlung) mit folgenden Linien bei den Beugungswinkeln 2 Theta (°):
| | |
|---|---|
| Linien großer Intensität: | 18,34; 26,46; |
| Linien mittlerer Intensität: | 12,02; 20,29; 22,26; 23,94; |
| Linien kleiner Intensität: | 7,35; 7,92; 8,42; 10,08; 11,10; 27,93; 28,11; 28,89; 29,34. |

8. Verfahren zur Herstellung der in Anspruch 7 angegebenen β-Modifikation des Farbstoffs der Formel I, dadurch gekennzeichnet, daß man den in der α-Modifikation vorliegenden Farbstoff der Formel I so lange in wäßrigem Medium in Gegenwart eines Dispergiermittels oder mehrerer Dispergiermittel auf Temperaturen von 50°C bis zum Siedepunkt der wäßrigen Phase, vorzugsweise auf Temperaturen von 50 bis 95°C erhitzt, bis die Umwandlung in die β-Modifikation erfolgt ist.

9. Färbepräparat, enthaltend die in Anspruch 7 angegebene bzw. die nach dem Verfahren eines bzw. mehrerer der Ansprüche 1 bis 6, bzw. des Anspruchs 8 hergestellte β-Modifikation des Farbstoffs der Formel I.

10. Verwendung der in Anspruch 7 angegebenen bzw. der nach dem Verfahren eines bzw. mehrerer der Ansprüche 1 bis 6, bzw. des Anspruchs 8 hergestellten β-Modifikation des Farbstoffs der Formel I zum Färben und Bedrucken von synthetischen und halbsynthetischen Fasermaterialien.

## Claims

1. Process for the preparation of the dyestuff of the formula I 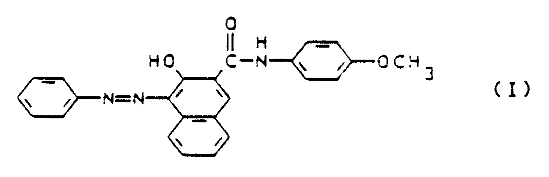 by coupling diazotized aniline to N-(p-methoxyphenyl)-3-hydroxynaphthalene-2-carboxamide in an aqueous phase and then isolating the dyestuff, characterized in that the suspension present when the coupling has ended is heated to temperatures of 50°C up to the boiling point of the aqueous phase in the presence of a dispersing agent or of several dispersing agents.

2. Process according to Claim 1, characterized in that heating is carried out until conversion of the dyestuff into the new crystal modification which forms on heating has taken place.

3. Process according to Claim 1 and/or 2, characterized in that the suspension is heated to temperatures of 50 to 95°C.

4. Process according to one or more of Claims 1 to 3, characterized in that the heating is carried out for 0.25 to 10 hours, preferably 0.5 to 2 hours.

5. Process according to one or more of Claims 1 to 4, characterized in that a pH of 7 to 10, preferably 8 to 9, is established before the heating.

6. Process according to one or more of Claims 1 to 5, characterized in that the suspension is stirred during the heating.

7. β-Modification of the dyestuff of the formula I 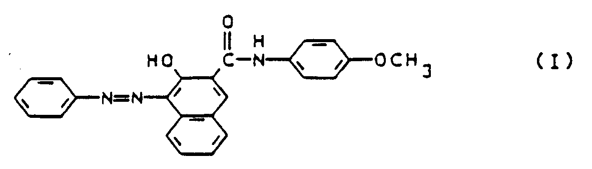 having the X-ray diffraction diagram (Cu-Kα-radiation) with the following lines at the diffraction angles 2 theta (°):
| | |
|---|---|
| lines of high intensity: | 18.34; 26.46; |
| lines of moderate intensity: | 12.02; 20.29; 22.26; 23.94; |
| lines of low intensity: | 7.35; 7.92; 8.42; 10.08; 11.10; 27.93; 28.11; 28.89; 29.34. |

8. Process for the preparation of the β-modification of the dyestuff of the formula I described in Claim 7, characterized in that the dyestuff of the formula I present in the α-modification is heated to temperatures of 50°C up to the boiling point of the aqueous phase, preferably to temperatures of 50 to 95°C, in an aqueous medium in the presence of a dispersing agent or several dispersing agents until the conversion into the β-modification has taken place.

9. Dye preparation containing the β-modification of the dyestuff of the formula I described in Claim 7 or prepared by the process of one or more of Claims 1 to 6 or of Claim 8.

10. Use of the β-modification of the dyestuff of the formula I described in Claim 7 or prepared by the process of one or more of Claims 1 to 6 or of Claim 8 for dyeing and printing synthetic and semi-synthetic fibre materials.

## Revendications

1. Procédé de fabrication du colorant de formule I 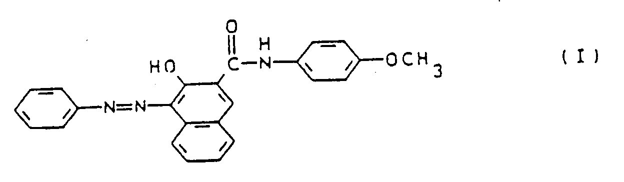 par copulation d'une aniline diazotée en phase aqueuse sur le N-(p-méthoxyphényl)-3-hydroxynaphtalène-2-carboxamide puis isolement du colorant, procédé caractérisé en ce qu'on soumet la suspension aqueuse, obtenue après la fin de la copulation, à un chauffage en présence d'un dispersant ou de plusieurs dispersants, à des températures de 50°C jusqu'au point d'ébullition de la phase aqueuse.

2. Procédé selon la revendication 1, caractérisé en ce qu'on chauffe jusqu'à transformation du colorant en la forme de variante cristalline nouvelle qui s'obtient lors du chauffage.

3. Procédé selon la revendication 1 ou 2, caractérisé en ce qu'on chauffe à des températures de 50 à 95°C.

4. Procédé selon une ou plusieurs des revendications 1 à 3, caractérisé en ce qu'on chauffe durant 0,25 à 10 heures, avantageusement durant 0,5 à 2 heures.

5. Procédé selon une ou plusieurs des revendications 1 à 4, caractérisé en ce qu'avant le chauffage on ajuste le pH à une valeur de 7 à 10, avantageusement de 8 à 9.

6. Procédé selon une ou plusieurs des revendications 1 à 4, caractérisé en ce qu'on agite pendant le chauffage.

7. Forme de modification ou variante β du colorant de formule I 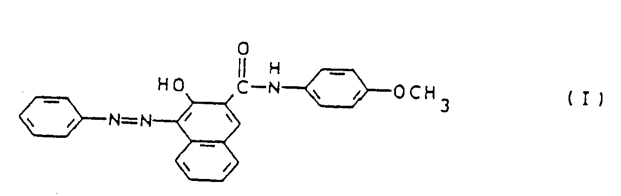 ayant le spectre de diffraction des rayons X (rayonnement Kα du cuivre) comportant les raies suivantes dans les angles de diffraction 2 théta (°):
| | |
|---|---|
| Raie d'une grande intensité | 18,34; 26,46 |
| Raie d'intensité moyenne | 12,02; 20,29; 22,26; 23,94; |
| Raie de faible intensité | 7,35; 7,92; 8,42 10,08; 11,10; 27,93; 28,11; 28,89; 29,34 |

8. Procédé pour fabriquer la forme de variante β du colorant de formule I, indiquée à la revendication 7, procédé caractérisé en ce qu'on chauffe le colorant de formule I, présent sous la forme de variante ou de modification α, en milieu aqueux en présence d'un dispersant ou de plusieurs dispersants, à des températures de 50°C jusqu'au point d'ébullition de la phase aqueuse, avantageusement à des températures de 50 à 95°C, jusqu'à ce que se soit produite la transformation en la forme de modification ou de variante β.

9. Préparation tinctoriale, contenant la forme de modification ou de variante β du colorant de formule I indiqué à la revendication 7 ou de la forme de variante obtenue selon le procédé d'une ou plusieurs des revendications 1 à 6 ou de la forme de variante obtenue selon la revendication 8.

10. Utilisation de la forme de modification ou variante β du colorant de formule I, indiquée à la revendication 7 ou fabriquée selon le procédé d'une ou plusieurs des revendications 1 à 6 ou de la revendication 8, pour teindre et imprimer des matières en fibres synthétiques et semi synthétiques.
